# EUROPEAN PATENT APPLICATION

(11) **EP 3 203 357 A1**
(43) Date of publication of application: **09.08.2017**
(21) Application number: 15845540.2
(22) Date of filing: 30.09.2015
(51) Int. Cl.: G06F 3/038, F24C 15/00, G06F 3/02, G06F 3/041, H05B 6/12

(54) **CONTROL UNIT, HEATING COOKING DEVICE, AND TOUCH SENSOR MODULE**

(30) Priority: 01.10.2014 JP 2014203285
(71) Applicant: Mitsubishi Electric Corporation, Chiyoda-ku Tokyo 100-8310 (JP); Mitsubishi Electric Home Appliance Co., Ltd., Fukaya-shi, Saitama 369-1295 (JP)
(72) Inventor: YOSHIOKA, Hirokazu, Fukaya-shi Saitama 369-1295 (JP)
(74) Representative: Pfenning, Meinig & Partner mbB
(86) International application number: PCT/JP2015/077670
(87) International publication number: WO 2016/052587

(57) **Abstract**

A control unit includes a touch sensor module including a touch sensor configured to detect a touch input from a pointer, and a main controller configured to acquire a detection result of the touch sensor. The touch sensor module further includes a sensor communication unit configured to communicate with the main controller, and a flag generation unit configured to generate a flag when a touch from the pointer is detected. The main controller includes a flag acquisition unit configured to acquire the flag, and a control-communication unit configured to communicate with the touch sensor module to acquire the touch input detected by the touch sensor. The main controller is configured to communicate with the touch sensor module at first intervals when the flag is not acquired, and to communicate with the touch sensor module at second intervals when the flag is acquired. The second intervals are shorter than the first intervals.

## Description

### Technical Field

The present invention relates to a control unit, a heating cooker, and a touch sensor module.

### Background Art

In the related art, there has been known a refrigerator including a main control unit controlling a fan and a compressor, and a sub-control unit including touch sensors, the refrigerator communicating between the main control unit and the sub-control unit, and controlling the fan and the compressor in accordance with inputs via the touch sensors (see Patent Literature 1).

### Citation List

### Patent Literature

Patent Literature 1: Japanese Unexamined Patent Application Publication No. 2013-68402 (Page 4 and Fig. 6)

### Summary of Invention

### Technical Problem

However, in the configuration of Patent Literature 1, when the main control unit and the sub-control unit communicate with each other at regular intervals, for example, a speed of response to an input to a touch sensor may be slow in some cases.

The present invention has been made on the background of the above-mentioned problem, and therefore has an object to provide a control unit with an improved speed of response to a touch input.

### Solution to Problem

According to one embodiment of the present invention, a control unit includes a touch sensor module including a touch sensor configured to detect a touch input from a pointer, and a main controller configured to acquire a detection result of the touch sensor. The touch sensor module further includes a sensor communication unit configured to communicate with the main controller, and a flag generation unit configured to generate a flag when a touch from the pointer is detected. The main controller includes a flag acquisition unit configured to acquire the flag, and a control-communication unit configured to communicate with the touch sensor module to acquire the touch input detected by the touch sensor. The main controller is configured to communicate with the touch sensor module at first intervals when the flag is not acquired, and to communicate with the touch sensor module at second intervals when the flag is acquired. The second intervals are shorter than the first intervals.

### Advantageous Effects of Invention

The control unit according to the one embodiment of the present invention has an improved speed of response to a touch input.

### Brief Description of Drawings

[Fig. 1] Fig. 1 is a perspective view of a built-in kitchen including a heating cooker according to Embodiment 1 of the present invention.
[Fig. 2] Fig. 2 is a perspective view of the heating cooker illustrated in Fig. 1.
[Fig. 3] Fig. 3 is a view for illustrating placement of an object to be heated into a grill device illustrated in Fig. 2.
[Fig. 4] Fig. 4 is a diagram for schematically illustrating a configuration of the heating cooker illustrated in Fig. 1 to Fig. 3.
[Fig. 5] Fig. 5 is a diagram for schematically illustrating a configuration of a touch sensor controller illustrated in Fig. 4.
[Fig. 6] Fig. 6 is a diagram for schematically illustrating a configuration of a main controller illustrated in Fig. 4.
[Fig. 7] Fig. 7 is a chart for illustrating an example of operation of a touch sensor module illustrated in Fig. 5.
[Fig. 8] Fig. 8 is a chart for illustrating an example of operation of the main controller illustrated in Fig. 6.

### Description of Embodiments

An embodiment of the present invention is described below with reference to the drawings. In the drawings, the same or corresponding components are denoted by the same reference signs, and descriptions of the components are omitted or simplified as appropriate. Shapes, sizes, arrangements, and other factors of components illustrated in the drawings may be changed as appropriate without departing from the scope of the invention.

### Embodiment 1

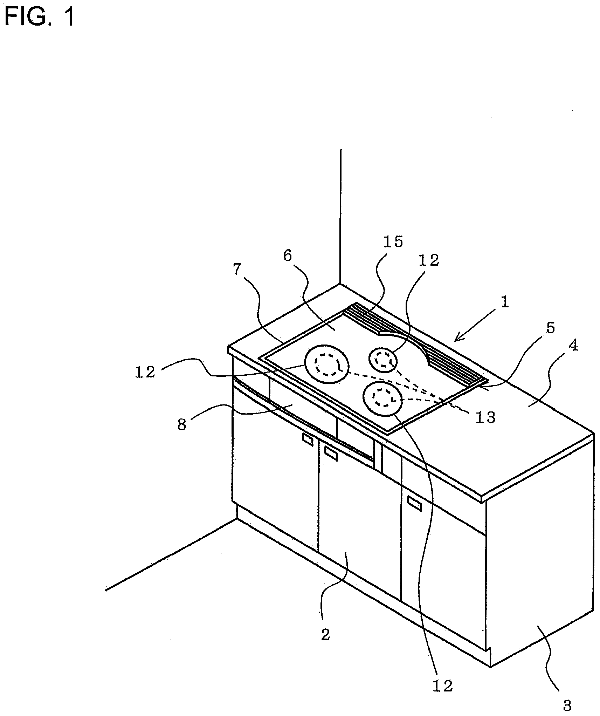

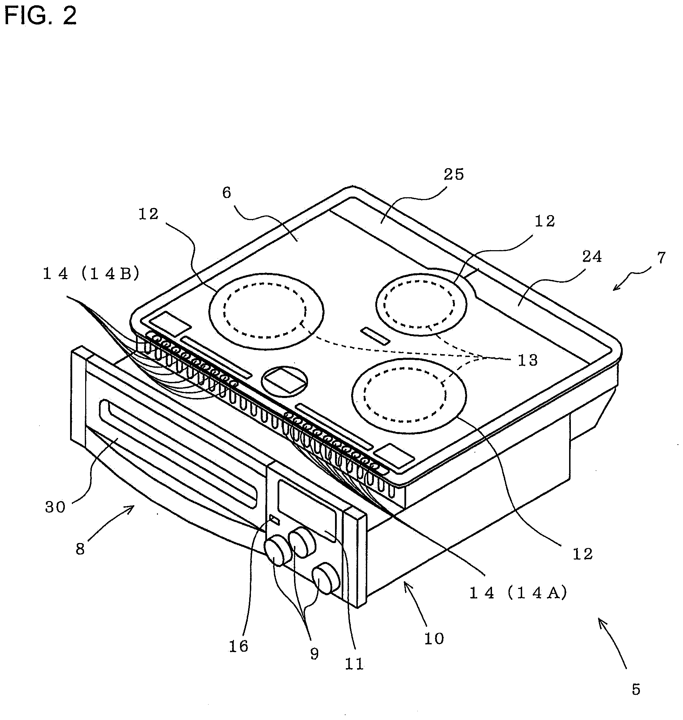

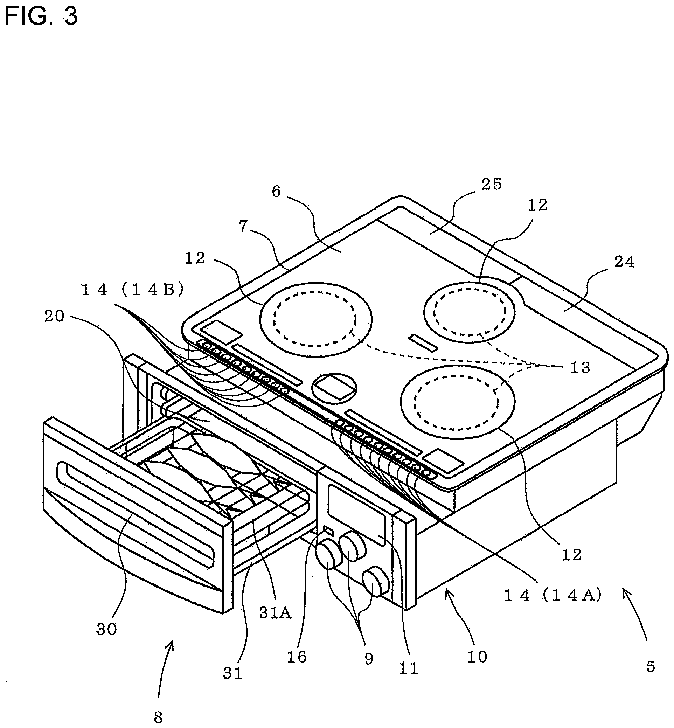

Fig. 1 is a perspective view of a built-in kitchen including a heating cooker according to Embodiment 1 of the present invention. Fig. 2 is a perspective view of the heating cooker illustrated in Fig. 1. Fig. 3 is a view for illustrating placement of an object to be heated into a grill device illustrated in Fig. 2. As illustrated in Fig. 1, a heating cooker 5 according to Embodiment 1 is of a built-in type, and is built in a kitchen cabinet 1. The heating cooker 5 is not limited to the built-in type, and may be of a stationary type. The kitchen cabinet 1 includes a cabinet main body 3 including cabinet doors 2 on the front side of the cabinet main body 3, and a kitchen countertop 4 installed on the cabinet main body 3, for example.

As illustrated in Fig. 1 to Fig. 3, the heating cooker 5 includes an upper unit 7 and a lower unit 10. The upper unit 7 includes a top plate 6, and upper unit heating units 13 provided below the top plate 6. At positions on the top plate 6 corresponding to the upper unit heating units 13, placement units 12 for cooking vessels are formed. A user may place a cooking vessel, such as a pot, on the placement unit 12 to cook an object to be heated contained in the cooking vessel. The upper unit heating unit 13 is an induction heating coil, for example, and corresponds to a "heating unit" in the present invention. As illustrated in Fig. 2 and Fig. 3, a plurality of touch sensors 14 are mounted in the front of the top plate 6, and the user may touch the touch sensor 14 to give an instruction to the heating cooker 5. For example, the user may operate the touch sensors 14 to give instructions, such as selecting from a cooking menu, setting cooking time, and adjusting a heat level. The touch sensors 14 include a right touch sensor group 14A arranged on the right at the front of the top plate 6, and a left touch sensor group 14B arranged on the left at the front of the top plate 6. The right touch sensor group 14A includes ten touch sensors 14, and the left touch sensor group 14B includes nine touch sensors 14, for example. The touch sensor 14 is configured to detect a touch with a pointer, such as a finger of the user, and is a touch sensor 14 of a capacitive sensing type or a resistive membrane type, for example. The number of touch sensors 14 is determined as appropriate depending on the specifications of the heating cooker 5, and may be one or more. In the rear of the top plate 6, as illustrated in Fig. 2 and Fig. 3, an intake port 24 and an exhaust port 25 are provided, and a cover 15 having slits is placed on the intake port 24 and the exhaust port 25 as illustrated in Fig. 1.

The lower unit 10 includes a grill device 8, operation units 9, a display unit 11, and a sound notification unit 16. The operation units 9 are input units used to give instructions to the heating cooker 5, and the user may operate the operation units 9 to select from a cooking menu, for example. The display unit 11 is configured to display a state of the heating cooker 5 and other information, and includes a light emitting unit, such as a light-emitting diode (LED). The operation units and the display unit may be a touch panel in which the operation units and the display unit are formed integrally. The sound notification unit 16 is configured to include a sound emitting body, such as a speaker, and to provide notification to the user by a sound. The grill device 8 is configured to cook the object to be heated that is contained in a heating chamber 20, and includes a sheathed heater configured to emit radiant heat to the object to be heated for heating, or a convection heater configured to blow hot air to the object to be heated for heating, for example. A grill heating unit, such as the sheathed heater and the convection heater, corresponds to the "heating unit" in the present invention. The grill device 8 includes a door 30 at the front. When the door 30 is pulled to the front as illustrated in Fig. 3, the object to be heated is placed on a pan 31 or a grill grate 31 A. When the door 30 is pushed back, the pan 31 and the grill grate 31A are housed in the heating chamber 20, and the door 30 closes the front opening of the heating chamber 20.

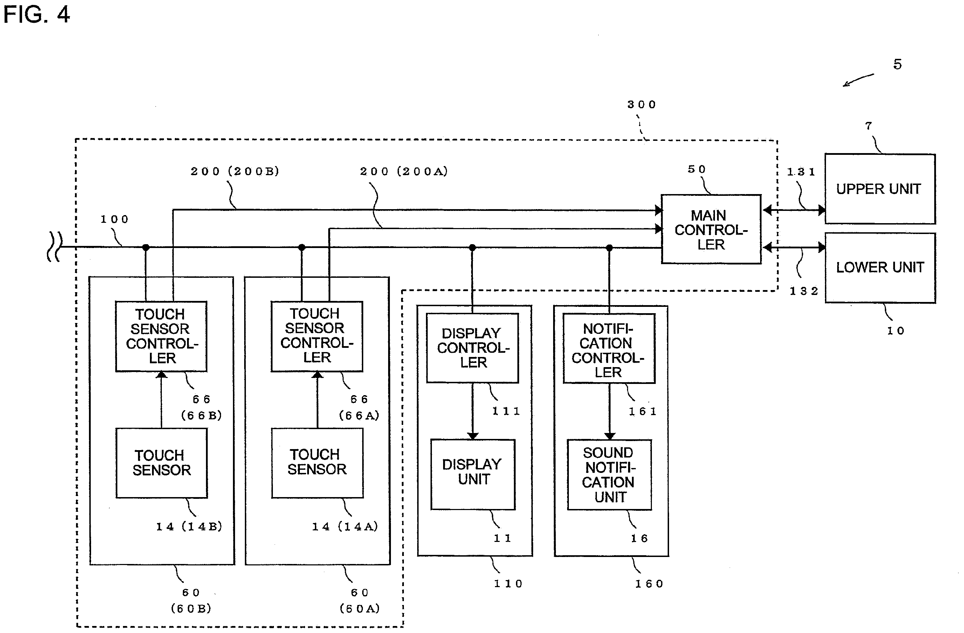

Fig. 4 is a diagram for schematically illustrating a configuration of the heating cooker illustrated in Fig. 1 to Fig. 3. The heating cooker 5 includes a main controller 50 configured to control the entire heating cooker 5. Touch sensor modules 60, a display module 110, and a sound notification module 160 are connected to the main controller 50 via a communication line 100, and the main controller 50 is configured to communicate with the touch sensor modules 60, the display module 110, and the sound notification module 160. In addition to the above-mentioned modules, other module configured to communicate with the main controller 50 may be connected to the communication line 100. Examples of the other module include a liquid crystal module configured to include a display device, such as a liquid crystal display. The main controller 50 and each of the touch sensor modules 60 are connected to each other via a flag transmission line 200. A control unit 300 obtained by connecting the main controller 50 to the touch sensor modules 60 corresponds to the "control unit" in the present invention.

The touch sensor module 60 is configured to include the touch sensor 14 and a touch sensor controller 66, and to cause the main controller 50 to acquire a touch input to the touch sensor 14 with the pointer, such as a finger of the user. In Embodiment 1, a description is given of an example in which the heating cooker 5 includes a first touch sensor module 60A including the right touch sensor group 14A, and a second touch sensor module 60B including the left touch sensor group 14B, but the heating cooker 5 may be configured to include one touch sensor module 60 or three or more touch sensor modules 60. In the case of the configuration including the first touch sensor module 60A and the second touch sensor module 60B, for example, when an input is made to one of the first touch sensor module 60A and the second touch sensor module 60B, the main controller 50 is configured to receive a signal input from the other one of the first touch sensor module 60A and the second touch sensor module 60B, but not to perform control in accordance with the signal, to thereby control the influence caused by an erroneous input.

The display module 110 is configured to include the display unit 11 and a display controller 111, and to cause the display unit 11 to display information in response to an instruction from the main controller 50. The sound notification module 160 includes the sound notification unit 16 and a notification controller 161, and is configured to provide notification from the sound notification unit 16 in response to an instruction from the main controller 50. In Embodiment 1, a description is given of an example in which the heating cooker 5 includes one display module 110 and one sound notification module 160, but the heating cooker 5 may include a plurality of display modules and a plurality of sound notification modules. The display module 110 and the sound notification module 160 correspond to the "notification module" in the present invention.

To the main controller 50, the upper unit 7 is connected via a control line 131, and the lower unit 10 is connected via a control line 132. The main controller 50 is configured to control the upper unit heating units 13 of the upper unit 7 and the grill heating unit of the lower unit 10 in accordance with inputs from the touch sensor modules 60.

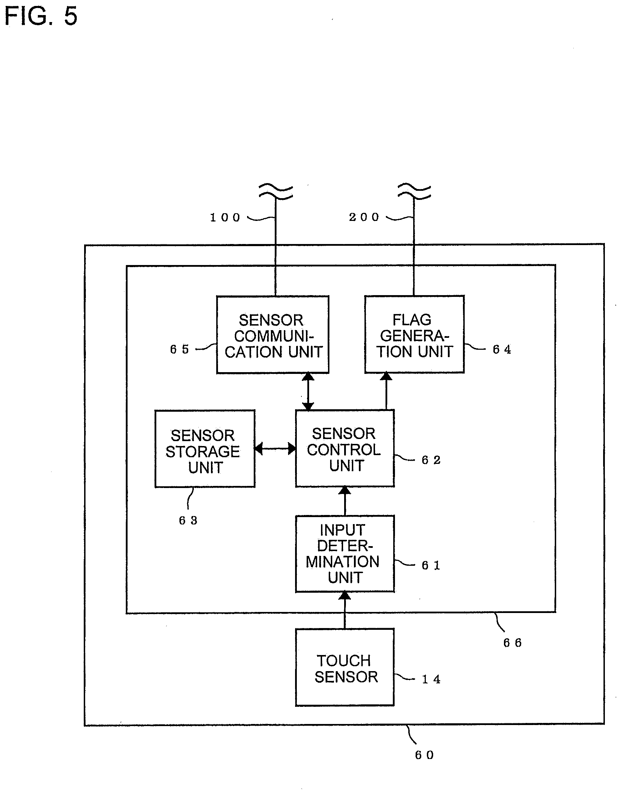

Fig. 5 is a diagram for schematically illustrating a configuration of the touch sensor controller illustrated in Fig. 4. The touch sensor controller 66 includes an input determination unit 61, a sensor control unit 62, a sensor storage unit 63, a flag generation unit 64, and a sensor communication unit 65. The input determination unit 61 is configured to make determination on a touch input for each of the plurality of touch sensors 14. The input determination unit 61 determines that a touch input is provided when outputs of the respective touch sensors 14 match each other M times in succession, for example, and outputs a touch sensor signal associated with the touch sensor 14 to which the touch input has been made. For example, the input determination unit 61 determines outputs of N touch sensors 14 in turn, and determines an output of each of the N touch sensors 14 in ts (ms), to thereby make determination at intervals of tx = ts x N x M (ms). The period ts, in which an output of one touch sensor 14 is determined, is several (ms), for example. The input determination unit 61 determines the input to the touch sensor 14 as described above, and hence is configured to acquire a touch input to the touch sensor 14 accurately while the influence of chattering and other causes are removed.

The sensor control unit 62 includes a central processing unit (CPU) or a dedicated circuit, for example, and is configured to control the entire touch sensor module 60. The sensor storage unit 63 is a non-volatile memory, for example, and is configured to store a control program for controlling the touch sensor module 60, for example. The flag generation unit 64 is connected to the flag transmission line 200, and is configured to generate a flag in response to the determination by the input determination unit 61, and to cause the main controller 50 to acquire the flag. The sensor communication unit 65 is connected to the communication line 100, and is configured to communicate with the main controller 50.

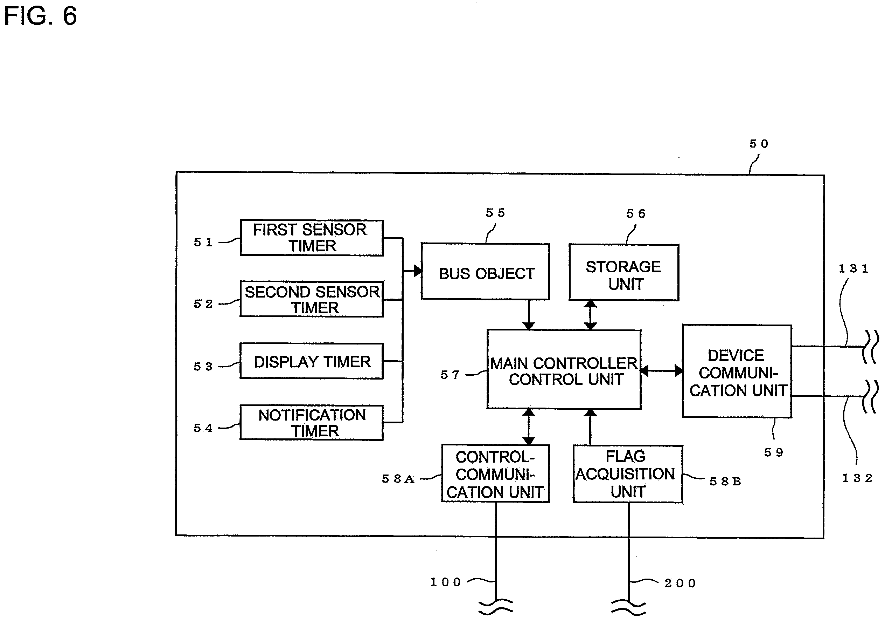

Fig. 6 is a diagram for schematically illustrating a configuration of the main controller illustrated in Fig. 4. The main controller 50 includes a first sensor timer 51, a second sensor timer 52, a display timer 53, a notification timer 54, a bus object 55, a storage unit 56, a main controller control unit 57, a control-communication unit 58A, a flag acquisition unit 58B, and a device communication unit 59. The first sensor timer 51 is configured to transmit a communication request to communicate with the first touch sensor module 60A at communication intervals of A (ms), for example. The second sensor timer 52 is configured to transmit a communication request to communicate with the second touch sensor module 60B at communication intervals of B (ms), for example. The display timer 53 is configured to transmit a communication request to communicate with the display module 110 at communication intervals of C (ms), for example. The notification timer 54 is configured to transmit a communication request to communicate with the sound notification module 160 at communication intervals of D (ms), for example. The communication intervals A (ms) at which the main controller 50 communicates with the first touch sensor module 60A and the communication intervals B (ms) at which the main controller 50 communicates with the second touch sensor module 60B are several hundred (ms) to several thousand (ms), for example, normally when the flag acquisition unit 58B has not acquired a flag. The communication interval A (ms) and the communication interval B (ms) are the same interval, for example. Meanwhile, the communication intervals C (ms) at which the main controller 50 communicates with the display module 110 and the communication intervals D (ms) at which the main controller 50 communicates with the sound notification module 160 are several (ms), for example. In other words, the communication intervals at which the main controller 50 communicates with the touch sensor modules 60 are longer than the communication intervals at which the main controller 50 communicates with the other modules, such as the display module 110 and the sound notification module 160.

The bus object 55 is a buffer, and is configured to temporarily store communication requests from the first sensor timer 51, the second sensor timer 52, the display timer 53, the notification timer 54, and other components. The main controller control unit 57 is configured to use a communication request that is temporarily stored in the bus object 55 to instruct the control-communication unit 58A to communicate. In the following description, to facilitate understanding of Embodiment 1, the bus object 55 and the main controller control unit 57 are described as a collective concept of a bus object unit 55A. In other words, the bus object unit 55A is configured to instruct the control-communication unit 58A to communicate at regular control intervals in response to a communication request. When a plurality of communication requests have been received, the bus object unit 55A processes the communication requests in decreasing order of priority. In Embodiment 1, the communication requests is in decreasing priority of the communication request from the first sensor timer 51, the communication request from the second sensor timer 52, the communication request from the display timer 53, and the communication request from the notification timer 54, for example. When the communication request from the first sensor timer 51 and the communication request from the display timer 53 are received, for example, the bus object unit 55A first instructs the control-communication unit 58A in accordance with the communication request from the first sensor timer 51, and then instructs the control-communication unit 58A in accordance with the communication request from the display timer 53. The control-communication unit 58A is configured to communicate with the modules connected to the communication line 100 in accordance with instructions from the bus object unit 55A. The storage unit 56 is a non-volatile memory, for example, and is configured to store a control program for controlling the main controller 50, for example. The main controller control unit 57 is formed of a CPU or a dedicated circuit, for example, and is configured to control the entire main controller 50. The flag acquisition unit 58B is configured to acquire the flag generated by the flag generation unit 64 connected to the flag transmission line 200. The device communication unit 59 is configured to communicate with the upper unit 7 connected to the control line 131, and the lower unit 10 connected to the control line 132.

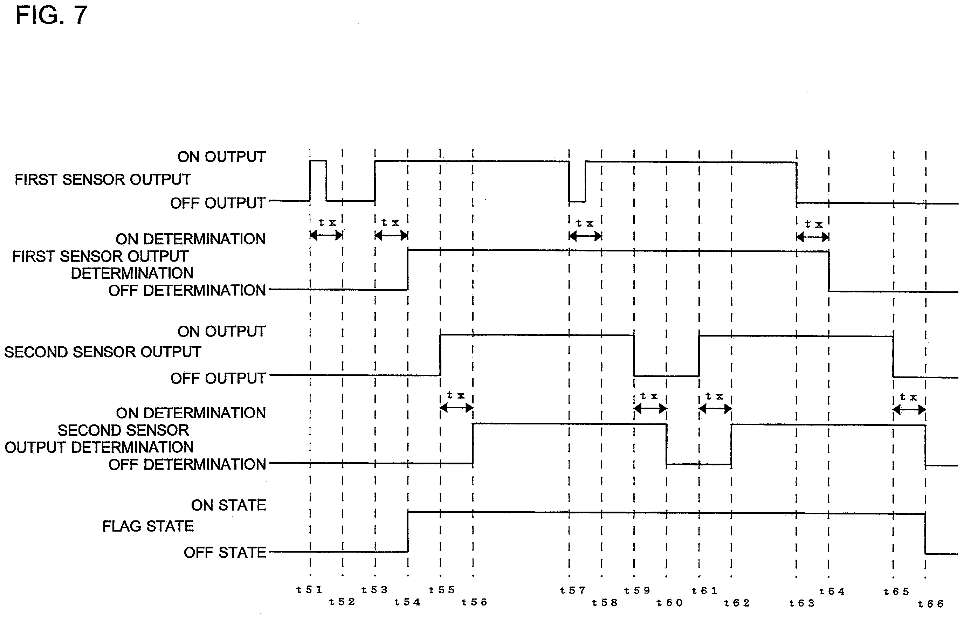

Next, a description is given of an example of operation of the touch sensor module 60 configured as described above. Fig. 7 is a chart for illustrating the example of the operation of the touch sensor module illustrated in Fig. 5. In the example of Fig. 7, to facilitate understanding of Embodiment 1, the touch sensor module 60 is described to be configured to include a first touch sensor 14A1 and a second touch sensor 14A2, but Embodiment 1 is not limited to the configuration in which the touch sensor module 60 includes two touch sensors 14. In Fig. 7, the first sensor output is an output of the first touch sensor 14A1, and the output is turned on when the pointer touches the first touch sensor 14A1. The first sensor output determination is an output of the input determination unit 61 illustrated in Fig. 5, and the determination is turned on when the output of the first touch sensor 14A1 is on continuously for a period tx (ms), and is turned off when the output of the first touch sensor 14A1 is off continuously for the period tx (ms). The second sensor output is an output of the second touch sensor 14A2, and is turned on when the pointer touches the second touch sensor 14A2. The second sensor output determination is an output of the input determination unit 61, and the determination is turned on when the output of the second touch sensor 14A2 is on continuously for the period tx (ms), and is turned off when the output of the second touch sensor 14A2 is off continuously for the period tx (ms). As described above, in Embodiment 1, the input determination unit 61 determines whether or not a touch input is provided to the touch sensor 14 using the output of the touch sensor 14, and hence the touch input to the touch sensor 14 is acquired accurately while the influence of chattering and other causes are removed. The flag state is a state of the flag generation unit 64, and the state is turned on when a touch input is provided to any one of the plurality of touch sensors 14, and is turned off when no touch input is provided to all the touch sensors 14.

First, a description is given of the first sensor output and the first sensor output determination of the first touch sensor 14A1. At time t51, the first sensor output of the first touch sensor 14A1 is turned on. However, the first sensor output turned on at time t51 is turned off before time t52, the first sensor output is not on continuously for the period tx (ms), and thus the first sensor output determination, which is a determination result of the input determination unit 61, remains off at time t52. The first sensor output is turned on at time t53, the first sensor output is on continuously for the period tx (ms) by time t54, and thus the first sensor output determination is turned on at time t54. At time t57, the first sensor output is turned off. However, the first sensor output is turned on before time t58, the first sensor output is not off continuously for the period tx (ms), and thus the first sensor output determination remains on. The first sensor output is turned off at time t63, the first sensor output is off continuously for the period tx (ms) by time t64, and thus the first sensor output determination is turned off at time t64.

Next, a description is given of the second sensor output and the second sensor output determination of the second touch sensor 14A2. The second sensor output of the second touch sensor 14A2 is turned on at time t55, the second sensor output is on continuously for the period tx (ms) by time t56, and thus the second sensor output determination, which is a determination result of the input determination unit 61, is turned on at time t56. The second sensor output is turned off at time t59, the second sensor output is off continuously for the period tx (ms) by time t60, and thus the second sensor output determination is turned off at time t60. The second sensor output of the second touch sensor 14A2 is turned on at time t61, the second sensor output is on continuously for the period tx (ms) by time t62, and thus the second sensor output determination, which is the determination result of the input determination unit 61, is turned on at time t62. The second sensor output is turned off at time t65, the second sensor output is off continuously for the period tx (ms) by time t66, and thus the second sensor output determination is turned off at time t66.

Next, a description is given of the flag state of the flag generation unit 64. From time t51 to time t54, outputs of all the touch sensors 14 are determined to be off (in the example of Fig. 7, the first sensor output determination and the second sensor output determination are determined to be off), and hence the flag state is off. At time t54, one or more of the outputs of the touch sensors 14 are determined to be turned on (in the example of Fig. 7, the first sensor output determination is determined to be turned on), and hence the flag state is turned on. From time t54 to time t66, one or more of the outputs of the touch sensors 14 are determined to be on, and hence the flag state is on. At time t66, the outputs of all the touch sensors 14 are determined to be turned off, and hence the flag state is turned off.

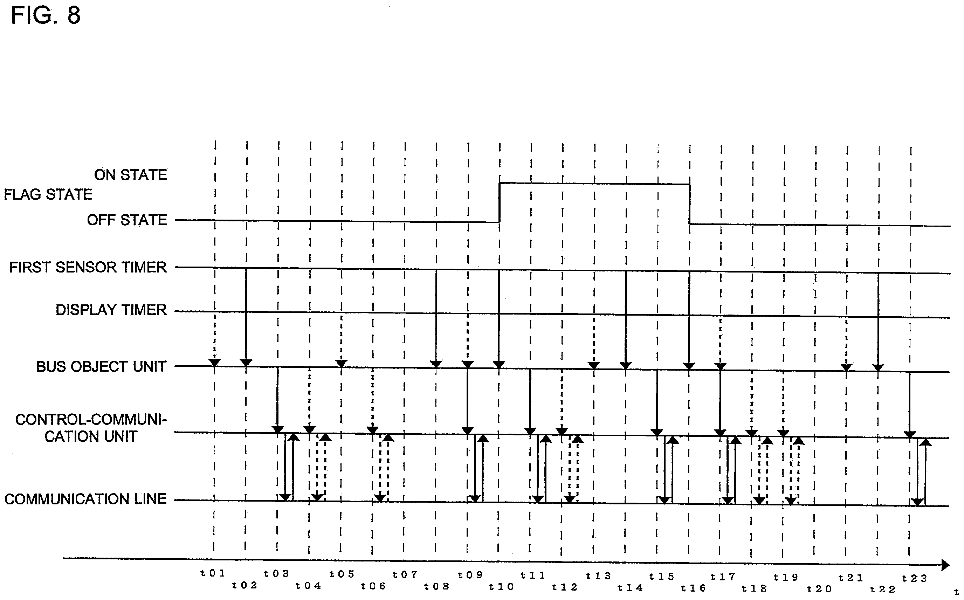

Next, a description is given of an example of operation of the main controller 50 configured as described above. Fig. 8 is a chart for illustrating the example of the operation of the main controller illustrated in Fig. 6. In Fig. 8, the solid arrows indicate flows of communication based on communication requests from the first sensor timer 51, and the dotted arrows indicate flows of communication based on communication requests from the display timer 53. In Fig. 8, to facilitate understanding of Embodiment 1, a description is given of an example in which the first sensor timer 51 and the display timer 53 transmit communication requests to the bus object unit 55A, but in reality, timers for all modules connected to the communication line 100 make communication requests to the bus object unit 55A. Also, in the example of Fig. 8, to facilitate understanding of Embodiment 1, control intervals of the first sensor timer 51, the display timer 53, and the bus object unit 55A are set, and the control intervals of the first sensor timer 51, the display timer 53, and the bus object unit 55A are not limited to the example illustrated in Fig. 8.

At time t01, the display timer 53 configured to transmit a communication request to communicate with the display module 110 transmits a communication request to the bus object unit 55A. At time t02, the first sensor timer 51 configured to transmit a communication request to communicate with the first touch sensor module 60A transmits a communication request to the bus object unit 55A. At time t03, the bus object unit 55A instructs the control-communication unit 58A to communicate. By time t03, the bus object unit 55A has received the communication request from the display timer 53 and the communication request from the first sensor timer 51. At time t03, the bus object unit 55A instructs the control-communication unit 58A not in accordance with the communication request from the display timer 53, which has been received first, but in accordance with the communication request from the first sensor timer 51, which has been received second. This is because the communication request from the first sensor timer 51 has a higher priority than the communication request from the display timer 53. The control-communication unit 58A, which has received the instruction from the bus object unit 55A at time t03, communicates with the first touch sensor module 60A in accordance with the instruction from the bus object unit 55A. The main controller 50 acquires a touch input state of the touch sensor 14, for example, in the communication to the first touch sensor module 60A. Then, at time t04, the bus object unit 55A instructs the control-communication unit 58A in accordance with the communication request from the display timer 53, and the control-communication unit 58A communicates with the display module 110. The main controller 50 instructs the display unit 11 of the display module 110 to display information, for example, in the communication to the display module 110.

In the example illustrated in Fig. 8, the display timer 53 transmits communication requests to the bus object unit 55A at intervals of four units of time. More specifically, in the example of Fig. 8, the display timer 53 transmits the communication requests to the bus object unit 55A at regular intervals of time t01, time t05, time t09, time t13, time t17, and time t21. Meanwhile, the first sensor timer 51 transmits communication requests at first intervals when the flag state is off, that is, when no touch input is provided to the touch sensor 14, and transmits communication requests at second intervals, which are shorter intervals than the first intervals when the flag state is on, that is, when a touch input is provided to the touch sensor 14. More specifically, from time t01 to time t10, the flag state is off, and hence the first sensor timer 51 transmits communication requests to the bus object unit 55A at intervals of six units of time, which are the first intervals. At time t10, the flag state is turned on so that the flag is turned over, and hence the first sensor timer 51 transmits a communication request to the bus object unit 55A. From time t10 to time t16, the flag state is on, and hence the first sensor timer 51 transmits communication requests to the bus object unit 55A at intervals of four units of time, which are the second intervals. At time t16, the flag state is turned off so that the flag is turned over, and hence the first sensor timer 51 transmits a communication request to the bus object unit 55A. From time t16 to time t23, the flag state is off, and hence the first sensor timer 51 transmits communication requests to the bus object unit 55A at the intervals of six units of time, which are the first intervals. As described above, as compared to the first intervals at which the main controller 50 and the touch sensor module 60 communicate with each other when no touch input is provided to the touch sensor 14, the second intervals at which the main controller 50 and the touch sensor module 60 communicate with each other when a touch input is provided to the touch sensor 14 are shorter. In reality, the display module 110, the sound notification module 160, and other "notification modules" communicate with the main controller 50 at third intervals, which are shorter than the first intervals and shorter than the second intervals. The intervals at which the display module 110 and the main controller 50 communicate with each other and the intervals at which the sound notification module 160 and the main controller 50 communicate with each other may be the same or different. For example, the first interval is several hundred (ms) to several thousand (ms), and the second interval is extremely short as compared the first interval (for example, period that is one tenth of the first interval). The third interval is several (ms).

As described above, in Embodiment 1, when a flag has been acquired, the main controller 50 sets the communication intervals at which the main controller 50 communicates with the touch sensor module 60 short to communicate with the touch sensor module 60, and hence a speed of response to a touch input to the touch sensor module 60 is improved. For example, the main controller 50 is configured to responsively control the display module 110, the sound notification module 160, the upper unit heating unit 13, the grill heating unit, or other components in accordance with the touch input to the touch sensor module 60.

Further, in Embodiment 1, when no flag has been acquired, the main controller 50 communicates with the touch sensor module 60 at communication intervals that are slower than those when a flag has been acquired, and hence a load on the main controller 50 is reduced.

Further, in Embodiment 1, when a flag has been acquired, the main controller 50 sets the communication intervals at which the main controller 50 communicates with the touch sensor module 60 short to communicate with the touch sensor module 60, and hence a press-and-hold touch input is acquired accurately. The main controller 50 acquires the press-and-hold touch input using a touch period during which the pointer touches the touch sensor 14 continuously, for example. Also, the main controller 50 acquires the press-and-hold touch input using signals of touch inputs acquired periodically via the communication line 100, and using information on whether or not a touch input state has continued (whether or not the touch input state is the same as the previous state). In other words, the main controller 50 periodically communicates with the touch sensor 14, and acquires the press-and-hold touch input when touch inputs are acquired successively. The user can perform the press-and-hold touch input to perform a count-up input or a count-down input, for example.

Moreover, in Embodiment 1, the main controller 50 is configured to communicate with the touch sensor module 60 even when no touch input is provided to the touch sensor module 60. Consequently, if an abnormality or a malfunction occurs in the touch sensor module 60, the main controller 50 can detect the abnormality or the malfunction in the touch sensor module 60, and provide notification on the occurrence of the abnormality or the malfunction from the sound notification unit 16, for example.

Also, in Embodiment 1, when outputs of one or more of the plurality of touch sensors 14 are determined to be on, a flag is generated, and the communication intervals at which the main controller 50 and the touch sensor module 60 communicate with each other are set short. Consequently, the main controller 50 is configured to accurately acquire a simultaneous pressing operation of two or more of the plurality of touch sensors 14.

Also, in Embodiment 1, the main controller 50 and the touch sensor module 60 communicate with each other when the flag is turned over. Consequently, the start of the press-and-hold touch input and the end of the press-and-hold touch input can be acquired accurately to thereby accurately acquire the press-and-hold touch input.

The present invention is not limited to the above-mentioned embodiment, and various alterations may be made without departing from the scope of the invention. In other words, the configurations of the above-mentioned embodiment may be improved as appropriate, or at least a component of the configurations may be substituted by other components. Further, components limited to be arranged at no particular positions are not limited to be arranged at the positions disclosed in the embodiment, and may be arranged at positions at which the components can achieve their functions.

For example, in the above description, the example of the control unit 300 applied to the heating cooker 5 has been described, but the control unit 300 may also be applied to another device including a touch sensor.

### Reference Signs List

1 kitchen cabinet 2 cabinet door 3 cabinet main body 4 kitchen countertop 5 heating cooker 6 top plate 7 upper unit 8 grill device 9 operation unit 10 lower unit 11 display unit 12 placement unit 13 upper unit heating unit 14 touch sensor 14A right touch sensor group 14A1 first touch sensor 14A2 second touch sensor 14B left touch sensor group 15 cover 16 sound notification unit 20 heating chamber 24 intake port 25 exhaust port 30 door 31 pan 31A grill grate 50 main controller 51 first sensor timer 52 second sensor timer 53 display timer 54 notification timer
55 bus object 55A bus object unit 56 storage unit 57 main controller control unit 58A control-communication unit 58B flag acquisition unit 59 device communication unit 60 touch sensor module 60A first touch sensor module 60B second touch sensor module 61 input determination unit 62 sensor control unit 63 sensor storage unit 64 flag generation unit 65 sensor communication unit66 touch sensor controller
100 communication line 110 display module 111 display controller
131 control line 132 control line 160 sound notification module 161 notification controller 200 flag transmission line 300 control unit

## Claims

1. A control unit, comprising:
a touch sensor module including a touch sensor configured to detect a touch input from a pointer; and
a main controller configured to acquire a detection result of the touch sensor,
the touch sensor module further including a sensor communication unit configured to communicate with the main controller, and a flag generation unit configured to generate a flag when a touch from the pointer is detected,
the main controller including a flag acquisition unit configured to acquire the flag, and a control-communication unit configured to communicate with the touch sensor module to acquire the touch input detected by the touch sensor,
the main controller being configured to communicate with the touch sensor module at first intervals when the flag is not acquired, and to communicate with the touch sensor module at second intervals when the flag is acquired, the second intervals being shorter than the first intervals.

2. The control unit of claim 1, wherein the main controller is configured to communicate with the touch sensor module when the flag is turned over, and to then communicate with the touch sensor module at the first intervals or the second intervals.

3. The control unit of claim 1 or claim 2, wherein the main controller is configured to count a touch period during which the pointer touches the touch sensor to acquire a press-and-hold touch input.

4. The control unit of claim 1 or claim 2, wherein the main controller is configured to periodically communicate with the touch sensor module, and to acquire a press-and-hold touch input when the touch inputs are acquired successively.

5. The control unit of any one of claim 1 to claim 4,
wherein the touch sensor module includes a plurality of the touch sensors, and
wherein the main controller is configured to acquire the touch input detected by each of the plurality of the touch sensors.

6. The control unit of claim 5, wherein the flag generation unit is configured to generate the flag when one or more of the plurality of the touch sensors detect the touches from the pointer.

7. The control unit of any one of claim 1 to claim 6, further comprising a notification module configured to provide notification,
wherein the main controller is configured to communicate with the notification module via the control-communication unit to cause the notification module to provide notification.

8. The control unit of claim 7, wherein the main controller is configured to communicate with the notification module at third intervals, the third intervals being shorter than the first intervals and being shorter than the second intervals.

9. A heating cooker, comprising:
a heating unit configured to heat an object to be heated; and
the control unit of any one of claim 1 to claim 8,
wherein the control unit is configured to control the heating unit in accordance with the touch input detected by the touch sensor.

10. A touch sensor module forming a part of a main controller configured to communicate with the touch sensor module to acquire a touch input from the touch sensor module, the touch sensor module comprising:
a touch sensor configured to detect a touch input from a pointer;
a sensor communication unit configured to communicate with the main controller; and
a flag generation unit configured to generate a flag when a touch from the pointer is detected, and to cause the main controller to acquire the flag.
